# EUROPÄISCHE PATENTSCHRIFT

(11) **EP 2 285 814 B1**
(45) Veröffentlichungstag und Bekanntmachung des Hinweises auf die Patenterteilung: **08.08.2012**
(21) Anmeldenummer: 09761596.7
(22) Anmeldetag: 25.05.2009
(51) Int. Cl.: C07F 15/00, C08L 83/04, B01J 31/06, C08G 77/38

(54) **RU-SULFOXID-KOMPLEXE, DEREN HERSTELLUNG UND VERWENDUNG**
RU SULFOXIDE COMPLEXES, THEIR PREPARATION AND USE
COMPLEXES SULFOXYDE-RU, LEUR PRÉPARATION ET LEUR UTILISATION

(30) Priorität: 11.06.2008 DE 102008002364
(43) Veröffentlichungstag der Anmeldung: 23.02.2011
(73) Patentinhaber: Wacker Chemie AG, 81737 München (DE)
(72) Erfinder: HOFMANN, Marco, 84489 Burghausen (DE); EBERLE, Hans-Jürgen, 81477 München (DE)
(74) Vertreter: Mieskes, Klaus Theoderich
(86) Internationale Anmeldenummer: PCT/EP2009/056314
(87) Internationale Veröffentlichungsnummer: WO 2009/150033

(56) Entgegenhaltungen:
- DE-A1-102006 017 594

## Beschreibung

Die vorliegende Erfindung betrifft neue Ru-Sulfoxid-KomplexKatalysatoren, deren Herstellung, ihre Verwendung in vernetzbaren Siliconzusammensetzungen, sowie die daraus hergestellten Siliconelastomere.

Die Addition von Si-H-funktionellen Verbindungen an Verbindungen mit aliphatischen ungesättigten Bindungen, insbesondere C=C-Doppelbindungen (Hydrosilylierung) ist bereits lange bekannt.

Über die Hydrosilylierung können Si-haltige organische Verbindungen, Organosilane und Organopolysiloxane hergestellt werden. Sie wird insbesondere in der additionsvernetzenden Aushärtung von Organopolysiloxanen in der Silikonindustrie verwendet, beispielsweise zur Herstellung von Elastomeren, Abformmassen in der Dentalindustrie oder von anti-adhäsiven Beschichtungen in der Papier- und Folienindustrie.

Als Katalysatoren für die Hydrosilylierungsreaktion werden am häufigsten Platin und seine Verbindungen verwendet, wobei das Platin entweder in metallischer Form, als auf einem anorganischen Träger fixiertes Metall, als Platinsalz oder in Form eines gegebenenfalls löslichen Platinkomplexes eingesetzt wird.

Bis heute wird für den Großteil der industriell durchgeführten Hydrosilylierungsreaktionen der aus US3715334 und US3775452 bekannte sog. "Karstedt-Katalysator" verwendet, der überwiegend aus einem dimeren Platin-Tetramethyl-divinyl-siloxan-Komplex besteht, beschreibbar durch die Formel [Pt₂(TMDVS)₃] (TMDVS = Tetramethyl-divinyl-disiloxan). Der Karstedt-Katalysator wird ausgehend von Hexachloroplatinsäure H₂PtCl₆ hergestellt, die als alkoholische Lösung ebenfalls häufig als Hydrosilylierungskatalysator eingesetzt wird.

Da Platin eines der teuersten Edelmetalle darstellt, gab es häufig schon Bestrebungen, andere Metalle und deren Verbindungen als Katalysatoren in der Hydrosilylierung einzusetzen. So ist aus dem Stand der Technik bereits die Verwendung der anderen Platingruppenmetalle Pd, Rh, Ir, Ru in der Hydrosilylierung bekannt. Diese wurden als Alternativen zu Pt bisher jedoch vor allem als Katalysatoren zur Verwendung bei speziellen Substraten beschrieben.

So werden beispielsweise in US 2004/0092759 A1 sowie in US 5559264 Ru-Katalysatoren, wie z.B. RuCl₃, RuBr₃, Ru(acac)₃, Ru/C, Ru₃ (CO)₁₂, [RuCl₂ (CO)₃]₂, [Ru (COD) Cl₂]ₙ (COD = 1,5-Cyclooctadien), Ru(PPh₃)₂(C(O)₂Cl₂ und Ru (PPh₃)₃ (CO)H₂ für die Hydrosilylierung von HSi(R)ₓ(OR)₃₋ₓ (x = 0-2)mit einem olefinischen Halogenid, wie Allylchlorid beschrieben.

In EP 0403706 A2 ist die Verwendung von Ru-Komplexen mit mindestens einem tertiären Phosphin-Liganden, wie beispielsweise Ru (CO)₃ (PPh₃)₂, RuCl₂ (PPh₃)₂, Ru (H) (Cl) (PPh₃)₃, Ru (PPh₃)₄H₂ und Ru(CH₂=CH₂) (PPh₃)₃ als Katalysatoren zur Hydrosilylierung von Allylaminen mit SiH-funktionellen Silanen beschrieben.

US 5248802 beschreibt die Hydrosilylierung von Trichlorsilan mit olefinischen Nitrilen, wie z.B. Acrylnitril in Gegenwart von Ru-Halogen- oder Ru-Phosphin-Verbindungen, wie RuCl₃, RuBr₃, RuI₃, Ru(CO)₃(PPh₃)₂, RuCl₂ (PPh₃)₃, Ru (H) (Cl) (PPh₃)₃, RuH₂ (PPh₃)₄, Ru(CH₂=CH₂) (PPh₃)₃ und RuCl₂(CO)₂(PPh₃)₂.

In DE 2810032 A1 ist schließlich die Hydrosilylierung von Dichlorsilan mit Olefinen in Gegenwart von Ru-Komplexen, wie beispielsweise RuCl₂ (PPh₃)₃, Ru (H) (Cl) (PPh₃)₃, RuH₃(PPh₃)₃[Si(OMe)₃], RuH₃(PPh₃)₃[Si(OMe)₂Ph] und RuH₂(PPh₃)₄ beschrieben.

In der Regel sind diese Katalysatoren aber den gängigen Pt-Katalysatoren bezüglich der Reaktivität und Selektivität deutlich unterlegen, insbesondere für die Vernetzung von Polysiloxanen über eine Hydrosilylierungsreaktion reicht die Geschwindigkeit und Selektivität der bisher für die Hydrosilylierung beschriebenen Nicht-Pt-Katalysatoren in der Regel nicht aus.
Sehr aktive Ru-Katalysatoren mit beispielsweise η⁴ gebundenen 1,5-Cyclooctadienliganden oder η⁴ gebundenen 1,3,5-Cyclooctatrienliganden für die Hydrosilylierung, insbesondere auch für die Vernetzung von Polysiloxanen, wurden auch bereits in der DE 102006017588 A1 beschrieben. Diese sehr aktiven Katalysatoren haben allerdings den Nachteil einer völligen oder teilweisen Inkompatibilität mit Polysiloxanen sowie einer Hydrosilylierungsselektivität, die deutlich unter der von gängigen Pt-Hydrosilylierungskatalysatoren, wie beispielsweise dem "Karstedt"-Katalysator liegt. Die Kompatibilität mit Polysiloxanen kann z.B. durch Einbringung "silicophiler" Liganden erhöht werden, wie z.B. in DE 102006017594 A1 anhand von η⁶-Aren-Ru-Komplexen beschrieben. Trotz der sehr guten Löslichkeit dieser Katalysatoren in Polysiloxanen ist die mit dieser Klasse von Katalysatoren resultierende Aktivität und Selektivität in der Vernetzung von Polysiloxanen immer noch nicht ausreichend.
Es bestand somit die Aufgabe einen in Polysiloxanen löslichen Hydrosilylierungskatalysator auf Basis einer Ru-Verbindung bereit zu stellen, der die Nachteile der bisher im Stand der Technik beschriebenen Ru-Hydrosilylierungskatalysatoren bezüglich der Aktivität und Selektivität nicht aufweist und somit eine echte Alternative zu den aus dem Stand der Technik

Überraschenderweise wurde gefunden, dass diese Aufgabe durch neutrale Ru(0)-Sulfoxid-Komplex-Katalysatoren (D) der allgemeinen Formel (I) gelöst wird, 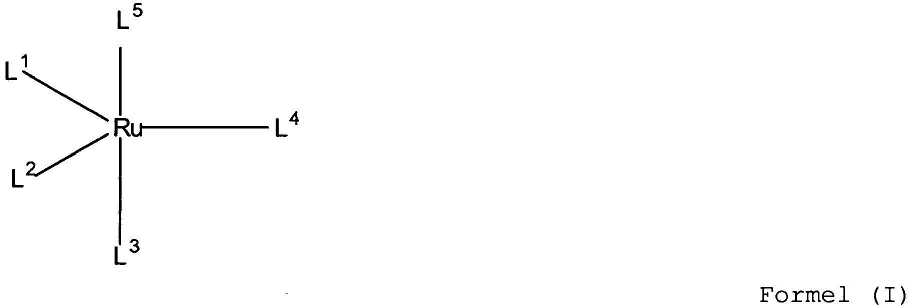 dadurch gekennzeichnet, dass
- mindestens einer der Liganden L¹ - L⁵ ein Sulfoxid-Ligand der allgemeinen Formel (II) ist

   R¹-S(=O)-R² Formel (II),

   wobei die Reste R¹ und R² unabhängig voneinander, gleich oder verschieden, ausgewählt werden aus der Gruppe enthaltend
   o geradkettige und verzweigtkettige Alkylgruppen, Alkenylgruppen und Alkinylgruppen
   o geradkettige und verzweigtkettige Alkylgruppen, Alkenylgruppen und Alkinylgruppen mit mindestens einem Substituenten, der ausgewählt ist aus der Gruppe enthaltend Alkoxy-, Siloxy-, Aryloxy-, Aryl-, Silyl-, Alkoxycarbonyl-, Aryloxycarbonyl-, Acyloxy-, Carbonamido- und Carbamoylgruppen sowie Halogenatomen;
   o Phenylgruppen mit oder ohne Substituenten, wobei Substituenten ausgewählt werden aus der Gruppe enthaltend Alkyl-, Alkenyl-, Alkinyl-, Silyl-, Alkoxy-, Siloxy-, Aryloxy-, Aryl-, Alkoxycarbonyl-, Aryloxycarbonyl-, Acyloxy-, Carbonamido- und Carbamoylgruppen sowie Halogenatomen;
   o R¹ und R² sind zu einem Heterocyclus, der das Schwefelatom enthält, oder zu einem Heterocyclus der der weitere Heteroatome enthält,
   mit der Maßgabe, das R¹ und R² zusammen 2-24 Kohlenstoffatome aufweisen, und
- mindestens einer der Liganden L¹ - L⁵ ein über eine oder zwei C=C-Funktionen n-gebundener Ligand der allgemeinen Formel (III) ist 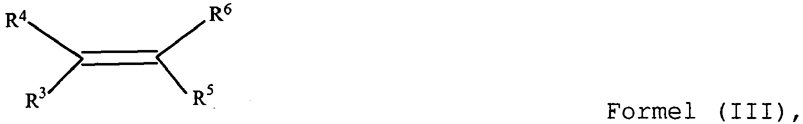 wobei
   die Reste R³-R⁶ unabhängig voneinander, gleich oder verschieden, ausgewählt werden aus der Gruppe enthaltend Wasserstoff, geradkettige oder verzweigte, cyclische oder acyclische, C₁-C₅₀ Alkyl-, C₂-C₅₀ Alkenyl-, C₂-C₅₀ Alkinyl-, C₆-C₃₀ Aryl-Reste, bei denen einzelne C-Atome nicht substituiert sind oder substituiert sind durch Halogen-, O-, N-, S-, Si- oder P-Atome,
   und
- die noch nicht besetzten Liganden L¹ - L⁵ gleich oder verschieden voneinander, ausgewählt werden aus der Gruppe der neutralen 2-, 4-, oder 6-Elektronen-Donatorliganden enthaltend,
   o CO;
   o CNR"', wobei R"' wiederum ausgewählt wird aus der Gruppe enthaltend Alkyl und Aryl;
   o PR"'₃ und P (OR"')₃, wobei R"' wiederum ausgewählt wird aus der Gruppe enthaltend Alkyl und Aryl;
   o Liganden enthaltend N-Donatoren, beispielsweise Nitrile, wie Acetonitril, Benzonitril oder Amine, Pyridin;
   o Liganden enthaltend S-Donatoren, die nicht den Sulfoxiden der allgemeine Formel (1) entsprechen, z.B. Thioether;
   o Liganden enthaltend O-Donatoren, beispielsweise lineare oder cyclische Ether wie Dialkylether oder Tetrahydrofuran.
   o Carben-Liganden, beispielsweise auch N-heterocyclische Carbene
mit der Maßgabe, dass keiner der Liganden L¹ - L⁵ 1,5-Cyclooctadien oder 1,3,5-Cyclooctatrien ist.

Die Sulfoxid-Liganden können entweder über das Schwefel- oder über das Sauerstoffatom an das Ruthenium gebunden sein.

Beispiele für Sulfoxid-Liganden sind Dimethyl-sulfoxid, Diethyl-sulfoxid, Di-n-propyl-sulfoxid, Di-iso-propyl-sulfoxid, Di-n-butyl-sulfoxid, Di-tert-butyl-sulfoxid, Di-allyl-sulfoxid, Methyl-phenyl-sulfoxid, usw.

Beispiele für cyclische Sulfoxid-Liganden sind Tetramethylensulfoxid und 1,4-Thioxan-S-oxid.

Besonders bevorzugt als Sulfoxid-Ligand ist Dimethylsulfoxid.

Wenn der über eine oder zwei C=C-Funktionen n-gebundene Ligand mehr als eine C=C-Funktionalität aufweist, so kann eine chelatartige η⁴-Koordination vorliegen und es sind zwei der Liganden L¹ - L⁵ besetzt.

Beispiele für den n-gebundenen Liganden mit einer oder mehreren C=C-Funktionen sind
- alle acyclischen Olefine mit zwei oder mehr Kohlenstoffatomen, wie z.B. Ethen (für R³-R⁶ = H), Propen, alle 1-Olefine (für R³-R⁵ = H, R⁶ = Alkyl) wie 1-Buten, 1-Penten, alle 2-Olefine.
- Substituierte Olefine mit R³-R⁶ gleich oder unabhängig voneinander Wasserstoff-, Halogen-, Nitro-, Nitrilo-, Hydroxy-, Alkoxy-, Aryloxy-, Amino-, Amido-, usw.
- Vinylsilane und -siloxane, wie 1,3-Divinyl-1,1,3,3-tetramethyldisiloxan, Vinyl-pentamethyl-disiloxan, Vinyltrimethylsilan

Weitere Beispiele n-gebundener Liganden mit einer oder mehreren C=C-Funktionen sind Styrol, α-Methylstyrol, Inden, cis- und *trans*-Stilben.

Beispiele für substituierte n-gebundener Liganden mit einer oder mehreren C=C-Funktionen sind Allylchlorid, Allylbromid, Allylalkohol, Allylcarbonat, Allylacetat, Allylglycidether, Allylbenzol, Methallylchlorid, Crotylchlorid

Desweiteren kann die C=C-Doppelbindung im n-gebundenen Liganden auch Bestandteil eines Cyclus sein, so dass R³, R⁴, R⁵ und R⁶ paarweise, einfach oder mehrfach, gleich oder unabhängig voneinander verschieden einen Cyclus ausbilden, resultierend in cyclischen, ggf. substituierten Olefinen mit drei oder mehr Kohlenstoffatomen, z.B. Cyclopropen, Cyclobuten, Cyclopenten, Cyclohexen, Cyclohepten, Cycloocten, Norbornen, usw.

Eine erfindungsgemäße Ausführungsform der Ru(0)-Sulfoxid-Komplex-Katalysatoren (D), bei dem nur ein Ligand ein Sulfoxid ist und nur ein Ligand ein über nur eine C=C-Doppelbindung n-gebundener Ligand ist, wird durch die allgemeinen Formeln (IV) und (V) dargestellt, 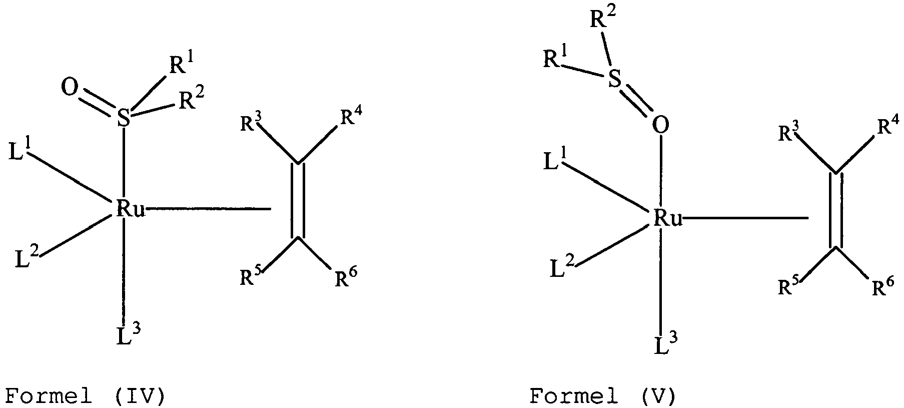 wobei die Reste R¹ und R², R³-R⁶ sowie die Liganden L¹ - L³ die oben genannte Bedeutung tragen.

Die allgemeinen Formeln (VI) und (VII) zeigen beispielhaft eine weitere erfindungsgemäße Ausführungsform der Ru(0)-Sulfoxid-Komplex-Katalysatoren (D), bei dem nur ein Ligand ein Sulfoxid ist und ein Ligand ein über zwei C=C-Doppelbindungen n-gebundener Ligand ist, 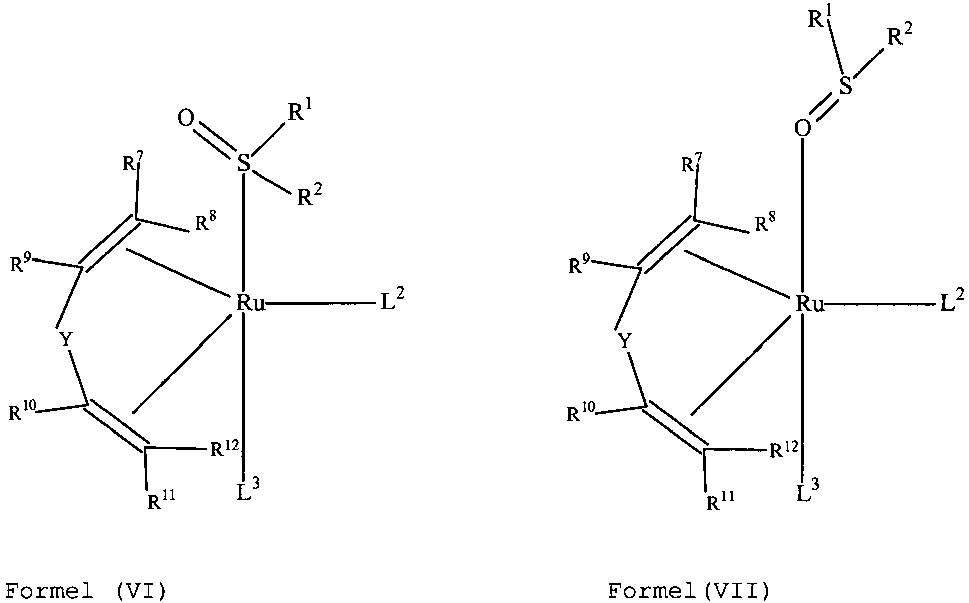 wobei die Reste R¹ und R² sowie die Liganden L² - L³ die oben genannte Bedeutung tragen, und R⁷-R¹² in Verbindung mit dem Abstandshalter Y so gewählt werden, dass sie in Ihrer Bedeutung der allgemeinen Formel (III) gleichkommen.

n-gebundene Liganden, die über zwei C=C-Funktionen an das Ruthenium komplexiert sein können sind beispielsweise 1,3-Butadien, 2-Methyl-1,3-butadien (Isopren), 2,3-Dimethyl-1,3-butadien, 1,6-Cyclodecen, Norbornadien, 1,2-Divinylbenzol, 1,3-Divinylbenzol, 1,4-Divinylbenzol, Diallylphthalat, 1,3-Divinyl-1,1,3,3-tetramethyldisiloxan, usw.

Besonders bevorzugt ist dabei die Koordination von 1,3-Divinyl-1,1,3,3-tetramethyldisiloxan, wie durch die allgemeinen Formeln (VIII) und (IX) dargestellt, 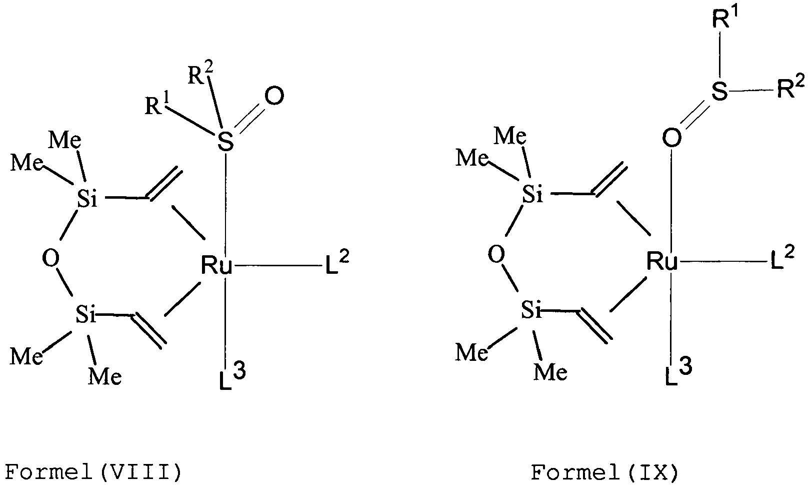 wobei, die Reste R¹, R², sowie die Liganden L² und L³ die vorstehend genannte Bedeutung tragen.

n-gebundene Liganden mit zwei Doppelbindungen können auch nur über eine Doppelbindung anbinden. Außerdem können π-gebundene Liganden mit mehr als zwei Doppelbindungen auch nur über eine oder zwei C=C-Funktionen an das Rutheniumzentrum anbinden, wie beispielsweise in 1,3,5,7-Tetravinyl-tetramethyl-cyclotetrasiloxan oder Diallylmaleat.

Bevorzugt ist die Koordination von n-gebundenen Liganden über zwei C=C-Doppelbindungen.

Die Synthese der erfindungsgemäßen Ru(0)-Sulfoxid-KomplexKatalysatoren (D) kann durch die dem Fachmann aus dem Stand der Technik grundsätzlich bekannten Standardverfahren erfolgen.

Bewährt zur Synthese von erfindungsgemäßen Ru(0)-Komplexen (D) hat sich ein Zugang über den leicht verfügbaren Ru(II)-Komplex *cis*-RuCl₂(DMSO)₄, erhältlich z.B. analog zu Wilkinson et al., J. Chem. Soc., Dalton Trans. 1973, 204. Dieser kann beispielsweise durch Reaktion mit dem C=C-funktionellen Liganden und einem geeigneten Reduktionsmittel unter Abspaltung von DMSO und Cl⁻ zu den entsprechenden erfindungsgemäßen Ru(0)-Komplexen umgesetzt werden.

Geeignete Reduktionsmittel sind alle aus dem Stand der Technik bekannten Reduktionsmittel, die in der Lage sind, Ru(II) zu Ru(0) zu reduzieren. Insbesondere zu nennen sind Alkohole, wie Methanol, Ethanol, 1-Propanol, 2-Propanol, n-Butanol, tert-Butanol, etc. Des Weiteren zu nennen sind metallische Reduktionsmittel, insbesondere Zink und Magnesium, etc.

Bei Einsatz des Alkohols als Reduktionsmittel empfiehlt es sich, eine Base zum Abfangen des gebildeten Chlorwasserstoffs einzusetzen, z.B. Na₂CO₃.

Wird ein primärer Alkohol eingesetzt, z.B. Ethanol, so kann aus dem Alkohol unter bestimmten Reaktionsbedingungen Kohlenmonoxid gebildet werden, das als Ligand am Ruthenium gebunden werden kann.

Eine weitere Möglichkeit der Herstellung besteht durch Reduktionen an anderen Ru(II)-Halogen-Komplexen oder Reduktionen ausgehend von RuCl₃.

Des Weiteren kann eine Herstellung auch über eine Ligandenaustauschreaktionen an verfügbaren Ru(0)-Komplexen, wie beispielsweise Ru(COD)(COT), erfolgen.

Die nachfolgenden Beispiele zeigen einige konkrete erfindungsgemäße Ausführungsformen der Ru(0)-Sulfoxid-KomplexKatalysatoren (D) ohne die Erfindung jedoch auf diese zu beschränken.

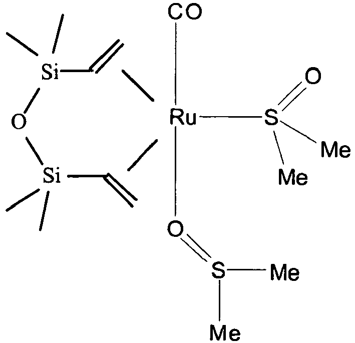

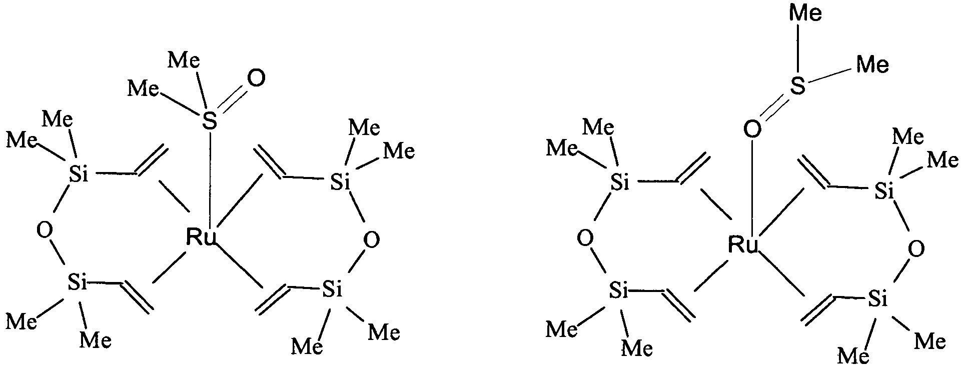

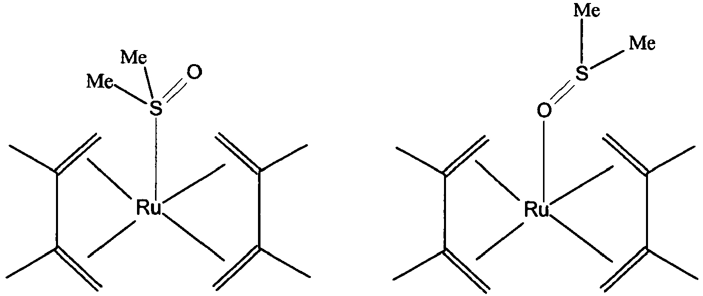

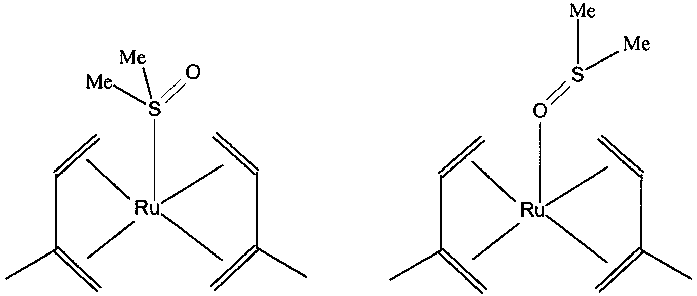

Die erfindungsgemäßen Ru(0)-Sulfoxid-Komplex-Katalysatoren (D) werden verwendet für Hydrosilylierungsreaktionen, für Polymerisationsreaktionen, bei denen die Aktivierung durch Wärmezufuhr erfolgt.

Die erfindungsgemäße Verwendung der Ru(0)-Sulfoxid-Komplex-Katalysator (D) kann allgemein in allen Hydrosilylierungsreaktionen, die dem Fachmann aus dem Stand der Technik bekannt sind und beispielsweise in Walter Noll "Chemie und Technologie der Silicone", Verlag Chemie GmbH, Weinheim/Bergstr. 1968; Bogdan Marciniec, "Comprehensive Handbook on Hydrosilylation", Oxford: Pergamon Press, 1992 beschrieben sind, erfolgen und allgemein in allen aus dem Stand der Technik bekannten hydrosilylierbaren, insbesondere vernetzbaren Zusammensetzungen eingesetzt werden.

Ein weiterer Gegenstand der Erfindung sind hydrosilylierbare Zusammensetzungen, enthaltend
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) mindestens einen erfindungsgemäßen Ru(0)-Sulfoxid-Komplex-Katalysator wie weiter oben beschrieben.

Bevorzugt enthalten die erfindungsgemäßen hydrosilylierbaren Zusammensetzungen Verbindungen mit wenigstens einer aliphatisch ungesättigten Kohlenstoff-Kohlenstoff-Bindung, die ausgewählt werden aus der Gruppe enthaltend Vinyl-funktionelle Organosilane und Vinyl-endständige Polydimethylsiloxan und Verbindungen mit wenigstens einer Silizium-Wasserstoff-Bindung, die ausgewählt werden aus der Gruppe enthaltend SiH-funktionelle Polysiloxane und Si-H-funktionelle Organosilane.

Hydrosilylierbare Zusammensetzungen bedeutet in einer bevorzugten Asuführungsform insbesondere vernetzbare Zusammensetzungen.

Die Verbindungen und verwendeten Mengen von (A) und (B) sind aus dem Stand der Technik hinlänglich bekannt.

Bei dieser bevorzugten Ausführungsform der hydrosilylierbaren Zusammensetzungen handelt es sich um additionsvernetzende Zusammensetzungen, enthaltend
(i) mindestens eine Verbindung ausgewählt aus der Gruppe enthaltend die Verbindungen (A'), (B') und (C),
   wobei
   (A') eine organische Verbindung und/oder eine siliziumorganische Verbindung, enthaltend mindestens zwei Reste mit aliphatischen Kohlenstoff-Kohlenstoff-Mehrfachbindungen,
   (B') ein siliziumorganische Verbindung, enthaltend mindestens zwei Si-gebundenen Wasserstoffatome, und
   (C) eine siliziumorganische Verbindung, enthaltend SiC-gebundene Reste mit aliphatischen Kohlenstoff-Kohlenstoff-Mehrfachbindungen und Si-gebundene Wasserstoffatome, bedeuten,
   mit der Maßgabe, dass die Zusammensetzung mindestens eine Verbindung mit aliphatischen Kohlenstoff-Kohlenstoff-Mehrfachbindungen und mindestens eine Verbindung mit Si-gebundenen Wasserstoffatomen enthält,
   und
(ii) mindestens einen erfindungsgemäßen Ru(0)-Sulfoxid-Komplex-Katalysator (D) wie weiter oben beschrieben.

Die Verbindungen und verwendeten Mengen von (A'), (B') und (C) sind aus dem Stand der Technik hinreichend bekannt.

Vorzugsweise werden als Ru(0)-Sulfoxid-Komplex-Katalysator (D) Verbindungen der allgemeinen Formel (VI) bis (IX) in den erfindungsgemäßen hydrosilylierbaren Zusammensetzungen eingesetzt. Besonders bevorzugt werden die weiter oben genannten konkreten Beispiele von (D) in den Zusammensetzungen verwendet.

Das erfindungsgemäße Verfahren zur Hydrosilylierung der Zusammensetzungen wird durch Energiezufuhr, bevorzugt durch Wärmezufuhr durchgeführt.

Beispiele der Verbindungen (A) und (A'), sind Vinyl-funktionelle Organosilane und Vinyl-endständige Polydimethylsiloxane.

Beispiele für Verbindungen (B) und (B') sind SiH-funktionelle Polysiloxane und Si-H-funktionelle Organosilane.

Die erfindungsgemäßen Ru(0)-Sulfoxid-Komplex-Katalysatoren (D) werden in den Zusammensetzungen im allgemeinen in einer Menge eingesetzt, so dass sich ein Ru-Gehalt von 5-1000 ppm, bevorzugt 5-500 ppm ergibt, bezogen auf die Gesamtmasse der Zusammensetzung.

Die Hydrosilylierungsreaktionen erfolgen im allgemeinen bei Temperaturen zwischen Raumtemperatur, insbesondere 20°C, und 200°C, bevorzugt zwischen 50°C und 160°C, und einem Druck von 900 bis 1100 hPa. Es können aber auch höhere oder niedrigere Temperaturen und Drücke angewendet werden.

Die Hydrosilylierungsreaktionen können entweder an Luft oder unter einer Inertgasatmosphäre (Stickstoff, Argon) durchgeführt werden, bevorzugt ist die Reaktion unter Inertgasatmosphäre.

Insbesondere werden solche Hydrosilylierungsreaktionen katalysiert, in denen C=C-funktionelle Polysiloxane mit SiH-funktionellen Polysiloxanen oder C=C-funktionellen Organosilanen mit SiH-funktionellen Organosilanen umgesetzt werden.

Bevorzugt sind vor allem die Umsetzung von vinyl-endständige Polydimethylsiloxane (A') mit SiH-funktionellen Polysiloxanen (B') der allgemeinen Formel (X)

Me₃SiO- [Si (H) (Me)O]ₓ-SiMe₃ Formel (X),

wobei
x für eine Zahl von 1 bis 500 steht, bevorzugt für 1 bis 100 sowie von Si-Vinyl-funktionellen Organosilanen (A') mit Si-H-funktionellen Organosilanen (B').

Beispiele für hydrosilyxlierbare Si-vinyl-funktionelle Organosilane (A) sind Vinyltrimethyl-silan, Vinyltriethoxysilan, Vinyl-methyl-diethoxysilan, Vinyl-methyldimethoxysilan, Vinyltrichlorsilan.

Als konkrete Beispiele für SiH-funktionelle Organosilane (B) seien genannt HSi(OR')₃, wobei R' hier für einen Alkyl-Rest steht, HSi(Me)₃₋ₒClₒ, wobei o hier für eine Zahl von 1 bis 3 steht und HSiR"₃, wobei R" hier für einen Alkyl oder ArylRest steht.

Ein weiterer Gegenstand der Erfindung sind Siliconelastomere erhältlich durch Vernetzung der oben beschriebenen additionsvernetzenden Zusammensetzungen.

Bei den erfindungsgemäßen Zusammensetzungen kann es sich um Einkomponenten-Siliconzusammensetzungen wie auch um Zweikomponenten-Siliconzusammensetzungen handeln. In letzterem Fall können die beiden Komponenten der erfindungsgemäßen Zusammensetzungen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält bzw. (A'), (B') und (D). Vorzugsweise handelt es sich bei den erfindungsgemäßen Zusammensetzungen jedoch um Einkomponenten-Zusammensetzungen.

Die Erfindung betrifft ebenfalls Beschichtungen, insbesondere anti-adhäsive Beschichtungen, beispielsweise zum Herstellen von Trenn-, Abdeck-, und Mitläuferpapieren erhältlich durch Vernetzung der oben beschriebenen erfindungsgemäßen hydrosilylierbaren Zusammensetzungen, insbesondere der beschriebenen Polyorganosiloxanzusammensetzungen.

Die Erfindung betrifft ebenfalls mit dem erfindungsgemäßen Verfahren hergestellte Polysiloxan- oder Organosilan-Zusammensetzungen, die beispielsweise zum Herstellen von Dentalabdrücken, Klebstoffen, Release-Liner, Flachdichtungen, Dichtungsmittel und Beschichtungen verwendbar sind.

Die in den erfindungsgemäßen Massen eingesetzten Verbindungen (A) und (B) bzw. (A') und (B') und (C) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A') und (B') wird Siloxan (C) eingesetzt, welches aliphatisch ungesättigte Reste und Si-gebundene Wasserstoffatome in den oben genannten Verhältnissen aufweist.

Beispiele für organische Verbindungen (A') sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxymethyl)-propan-triacrylat, 1,1,1-Tris(hydroxymethyl)-propan-trimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A') jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A'), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der durchschnittlichen allgemeinen Formel (XI)

R¹³_{d}R¹⁴ₑSiO_{(4-d-e)/2} Formel (XI)

eingesetzt, wobei hierin
- R¹³: gleich oder verschieden sein kann und einen von aliphatischen Kohlenstoff-Kohlenstoff-Mehrfachbindungen freien, organischen oder anorganischen Rest bedeutet,
- R¹⁴: gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
- d: 0, 1, 2 oder 3 ist und
- e: 0, 1 oder 2 ist
mit der Maßgabe, dass die Summe d + e kleiner oder gleich 3 ist und im Durchschnitt mindestens 2 Reste R¹⁴ je Molekül vorliegen.

Beim Rest R¹³ in der allgemeinen Formel (XI) kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der allgemeinen Formel (XI) miteinander verbinden.

Weitere Beispiele für R¹³ sind die einwertigen Reste -F, -Cl, - Br, OR⁵, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (XI) Si-gebundene Reste, wobei R⁵ die oben genannte Bedeutung trägt. Falls es sich bei Rest R¹³ um SiC-gebundene, substituierte Kohlenwasserstoffreste handelt, sind bevorzugte Substituenten Halogenatome, phosphorhaltige Reste, Cyanoreste, -OR^{x}, -NR^{x}-, - NR^{x}₂, -NR^{x}-C (O) -NR^{x}₂, -C (O) -NR^{x}₂, -C (O) R^{x}, -C(O)OR^{x}, -SO₂-Ph und - C₆F₅. Dabei bedeuten R^{x} unabhängig voneinander, gleich oder verschieden ein Wasserstoffatom oder einen einwertigen Kohlenwasserstoffrest mit 1 bis 20 Kohlenstoffatomen und Ph gleich Phenylrest.

Beispiele für Rest R¹³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest.

Beispiele für substituierte Reste R¹³ sind Halogenalkylreste, wie der 3,3,3-Trifluor-n-propylrest, der 2,2,2,2',2',2'-Hexafluor-isopropylrest, der Heptafluorisopropylrest, Halogenarylreste, wie der o-, m- und p-Chlorphenylrest, -(CH₂)ᵣ-N(R^{x}) C (O)NR^{x}₂, - (CH₂)ᵣ-C (O)NR^{x}₂, - (CH₂)ᵣ-C (O) R^{x}, - (CH₂)ᵣ-C (O) OR^{x}, - (CH₂),-C(O)NR^{x}₂, -(CH₂)ᵣ-C(O)-(CH₂)ₛ-C(O)CH₃, -(CH₂)ᵣ-NR^{x}-(CH₂)ₛ-NR^{x}₂, -(CH₂)ᵣ-O-CO-R^{x}, -(CH₂)ᵣ-O-(CH₂)ₛ-CH(OH)-CH₂OH, - (CH₂)ᵣ- (OCH₂CH₂)ₛ-OR^{x}, - (CH₂)ᵣ-SO₂-Ph und - (CH₂)r-O-C₆F₅, wobei R^{x} eine oben dafür angegebene Bedeutung hat, r und s hier gleiche oder verschiedene ganze Zahlen zwischen 0 und 10 sind und Ph den Phenylrest bezeichnet.

Beispiele für R¹³ gleich zweiwertige, beidseitig gemäß der allgemeinen Formel (XI) Si-gebundene Reste sind solche, die sich von den vorstehend für Rest R¹³ genannten einwertigen Beispielen dadurch ableiten, dass eine zusätzliche Bindung durch Substitution eines Wasserstoffatoms erfolgt. Beispiele für derartige Reste sind - (CH₂)ᵣ-, -CH(CH₃)-, -C (CH₃)₂-, - CH (CH₃)-CH₂-, -C₆H₄-, -CH (Ph) -CH₂-, -C(CF₃)₂-, -(CH₂)ᵣ-C₆H₄-(CH₂)ᵣ-, -(CH₂)ᵣ-C₆H₄-C₆H₄-(CH₂)ᵣ-, -(CH₂O)ₛ-, -(CH₂CH₂O)ₛ-, -(CH₂)ᵣ-Oₜ-C₆H₄-SO₂-C₆H₄-Oₜ- (CH₂)ᵣ-, wobei t 0 oder 1 ist, r und s die voranstehend genannte Bedeutung haben sowie Ph gleich Phenylrest ist.

Bevorzugt handelt es sich bei Rest R¹³ um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹⁴ kann es sich um beliebige, einer Anlagerungsreaktion (Hydrosilylierung) mit einer SiH-funktionellen Verbindung zugängliche Gruppen handeln.

Falls es sich bei Rest R¹⁴ um SiC-gebundene, substituierte Kohlenwasserstoffreste handelt, sind als Substituenten Halogenatome, Cyanoreste und -OR^{x} bevorzugt, wobei R^{x} die oben genannte Bedeutung hat.

Bevorzugt handelt es sich bei Rest R¹⁴ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A') kann in weiten Grenzen variieren, etwa zwischen 10² und 10⁶ g/mol. So kann es sich bei dem Bestandteil (A') beispielsweise um ein relativ niedermolekulares alkenylfunktionelles Oligosiloxan, wie 1,3-Divinyl-tetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A') bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R¹³₃SiO_{½}, R¹⁴R¹³₂SiO_{½}, R¹⁴R¹³SiO_{2/2} und R¹³₂SiO_{2/2} zusammengesetzt, wobei R¹³ und R¹⁴ die vorstehend angegebene Bedeutung haben. Verzweigte und netzwerkartige Polysiloxane enthalten zusätzlich trifunktionelle und/oder tetrafunktionelle Einheiten, wobei solche der Formeln R¹³SiO_{3/2}, R¹⁴SiO_{3/2} und SiO_{4/2} bevorzugt sind. Selbstverständlich können auch Mischungen unterschiedlicher, den Kriterien des Bestandteils (A') genügender Siloxane eingesetzt werden.

Besonders bevorzugt als Komponente (A') ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B') können alle hydrogenfunktionellen Organosiliciumverbindungen eingesetzt werden, die auch bisher in additionsvernetzbaren Massen eingesetzt worden sind.

Als Organopolysiloxane (B'), die Si-gebundene Wasserstoffatome aufweisen, werden vorzugsweise lineare, cyclische oder verzweigte Organopolysiloxane aus Einheiten der durchschnittlichen allgemeinen Formel (XII)

R¹³_{f}HgSiO_{(4-f-g)/2} Formel (XII)

eingesetzt, worin hier
- R¹³: gleich oder verschieden sein kann und die oben angegebene Bedeutung hat,
- f: 0, 1, 2 oder 3 ist und
- g: 0, 1 oder 2 ist,
mit der Maßgabe, dass die Summe von f + g kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B') Si-gebundenen Wasserstoff im Bereich von 0,04 bis 1,7 Gewichtsprozent, bezogen auf das Gesamtgewicht des Organopolysiloxans (B').

Das Molekulargewicht des Bestandteils (B') kann ebenfalls in weiten Grenzen variieren, etwa zwischen 10² und 10⁶ g/mol. So kann es sich bei dem Bestandteil (B') beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B') bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R¹³₃SiO_{1/2}, HR¹³₂SiO_{1/2}, HR¹³SiO_{2/2} und R¹³₂SiO_{2/2} zusammengesetzt, wobei R¹³ die vorstehend angegebene Bedeutung haben. Verzweigte und netzwerkartige Polysiloxane enthalten zusätzlich trifunktionelle und/oder tetrafunktionelle Einheiten, wobei solche der Formeln R¹³SiO_{3/2}, HSiO_{3/2} und SiO_{4/2} bevorzugt sind. Selbstverständlich können auch Mischungen unterschiedlicher, den Kriterien des Bestandteils (B') genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiHfunktioneller Verbindungen, wie Tetrakis(dimethyl-siloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B') ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A') und (B') sind handelsübliche Produkte bzw. nach in der Chemie gängigen Verfahren herstellbar.

Anstelle von Komponente (A') und (B') können die erfindungsgemäßen Massen Organopolysiloxane (C), die aliphatische Kohlenstoff-Kohlenstoff-Mehrfachbindungen und Si-gebundene Wasserstoffatome aufweisen, enthalten. Auch können die erfindungsgemäßen Siliconzusammensetzungen alle drei Komponenten (A'), (B') und (C) enthalten.
Falls Siloxane (C) eingesetzt werden, handelt es sich vorzugsweise um solche aus Einheiten der Formeln (XIII) bis (XV) 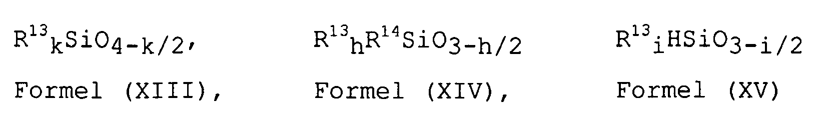 wobei hier
- R¹³ und R¹⁴: die oben angegebene Bedeutung haben,
- k: 0, 1, 2 oder 3 ist,
- h: 0, 1 oder 2 ist und
- i: 0, 1 oder 2 ist,
mit der Maßgabe, dass je Molekül mindestens 2 Reste R¹⁴ und mindestens 2 Si-gebundene Wasserstoffatome vorliegen.

Beispiele für Organopolysiloxane (C) sind solche aus SiO_{4/2}-, R¹³₃SiO_{½}-, R¹³₂R¹⁴SiO_{½}- und R¹³₂HSiO_{½}-Einheiten, sogenannte MQ-Harze, wobei diese Harze zusätzlich R¹³SiO_{3/2}- und R¹³₂SiO-Einheiten enthalten können, sowie lineare Organopolysiloxane im wesentlichen bestehend aus R¹³₂R¹⁴SiO_{½}-, R¹³₂SiO- und R¹³HSiO-Einheiten mit R¹³ und R¹⁴ gleich der oben genannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C.

Organopolysiloxane (C) sind nach in der Chemie gängigen Methoden herstellbar.

Außer den Komponenten (A'), (B'), (C) und (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäßen Zusammensetzungen, insbesondere die Polyorganosiloxanmassen können wahlweise als Bestandteil (F) weitere Zusätze zu einem Anteil von bis zu 70 Gew.-%, vorzugsweise 0,0001 bis 40 Gew.-%, enthalten. Diese Zusätze sind beispielsweise inaktive Füllstoffe, harzartige Polyorganosiloxane, die von den Siloxanen (A), (B), (A'), (B') und (C) verschieden sind, Inhibitoren, Stabilisatoren, Dispergierhilfsmittel, Lösungsmittel, Haftvermittler, Pigmente, Farbstoffe, Weichmacher, organische Polymere, Hitzestabilisatoren Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Die erfindungsgemäßen Zusammensetzungen können, falls erforderlich, in Flüssigkeiten gelöst, dispergiert suspendiert oder emulgiert werden Die erfindungsgemäßen Zusammensetzungen können - insbesondere je nach Viskosität der Bestandteile sowie Füllstoffgehalt - niedrigviskos und gießbar sein, eine pastöse Konsistenz aufweisen pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Zusammensetzungen, falls sie hochviskos sind, in Form eines Granulates zubereitet werden. Hierbei kann das einzelne Granulatteilchen alle Komponenten enthalten, oder die erfindungsgemäß eingesetzten Komponenten sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen, über gummiartige Materialien bis hin zu hochvernetzten Siliconen mit glasartigem Verhalten.

Die Herstellung der erfindungsgemäßen Zusammensetzungen kann nach bekannten Verfahren erfolgen, wie beispielsweise durch gleichmäßige Vermischung der einzelnen Komponenten. Die Reihenfolge dabei ist beliebig, bevorzugt ist jedoch die gleichmäßige Vermischung des Rutheniumkatalysators (D) mit einer Mischung aus (A'), (B') gegebenenfalls (E) und (F). Der erfindungsgemäß eingesetzte Rutheniumkatalysator (D) kann dabei als Festsubstanz oder als Lösung - in einem geeigneten Lösungsmittel gelöst - oder als sogenannter Batch - gleichmäßig mit einer geringen Menge (A') vermischt - eingearbeitet werden. Die Vermischung erfolgt dabei abhängig von der Viskosität von (A) beispielsweise mit einem Rührer, in einem Dissolver, auf einer Walze oder in einem Kneter.

Bei den erfindungsgemäß eingesetzten Komponenten (A') bis (F) kann es sich jeweils um eine einzelne Art einer solchen Komponente, wie auch um ein Gemisch aus mindestens zwei verschiedenen Arten einer solchen Komponente handeln.

Ein weiterer Gegenstand der vorliegenden Erfindung sind Formkörper hergestellt durch Vernetzung der erfindungsgemäßen Zusammensetzungen.

Die erfindungsgemäßen Siliconzusammensetzungen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren Formgießen und Formpressen, und Abformungen, die Verwendung als Dicht- Einbett- und Vergussmassen usw.

Die Verwendung der erfindungsgemäßen Verbindungen als Katalysatoren in der Hydrosilylierung zeichnet sich insbesondere dadurch aus, dass die Hydrosilylierungsselektivität sehr hoch und die Kompatibilität mit Polysiloxanen sehr gut ist, was gleichzeitig auch zu einer sehr hohen Aktivität führt.

Die erfindungsgemäßen vernetzbaren Siliconzusammensetzungen haben den Vorteil dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die erfindungsgemäßen Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigen, und erst bei erhöhter Temperatur rasch vernetzt.
Die erfindungsgemäßen Zusammensetzungen haben ferner den Vorteil, dass die Hydrosilylierungsreaktion sich nicht mit der Reaktionsdauer verlangsamt.

Die nachfolgenden Beispiele dienen der Veranschaulichung der Erfindung und sind in keinster Weise als Einschränkung zu betrachten.

Alle Angaben von Teilen und Prozentsätzen, falls nicht anders angegeben, beziehen sich auf das Gewicht. Im Folgenden beziehen sich alle Viskositätsangaben auf eine Temperatur von 25°C.

### Beispiele

### Herstellung der Katalysatoren

### Beispiel 1: Synthese von Ru(CO)(k-O-DMSO)(x-S-DMSO)(η⁴-Vi₂Me₄Si₂O)

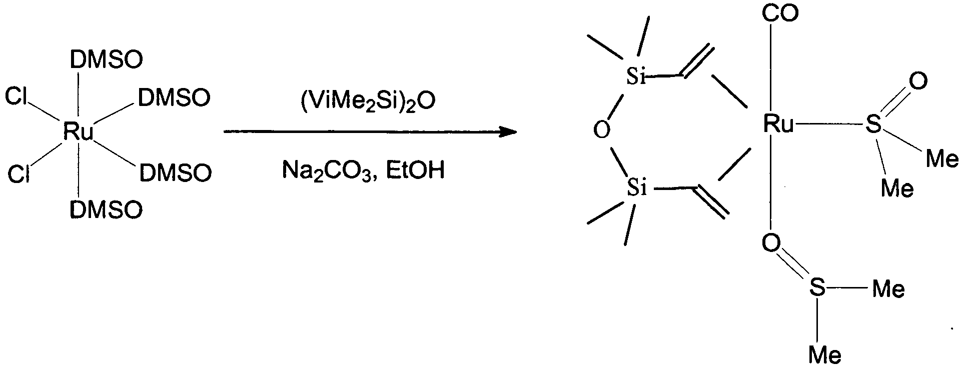

In einer Argonatmosphäre wird ein Gemisch aus 2,32 g (4,78 mmol) *cis*-RuCl₂(DMSO)₄, 1, 42 g Na₂CO₃ (13,4 mmol) und 11, 5 mL Divinyltetramethyldisiloxan (=(ViMe₂Si)₂O) in 85 mL absolutem Ethanol 12 h unter Rückfluss erhitzt, wobei eine gelb-orange Suspension entsteht. Nach dem Abkühlen auf Raumtemperatur werden alle flüchtigen Bestandteile im Vakuum abgezogen. Der verbleibende ölige Rückstand wird viermal mit je 25 mL Heptan 30 Minuten bei 40°C extrahiert und über eine vorgewärmte Fritte abfiltriert. Die vereinigten Extrakte werden im Vakuum eingedampft. Es verbleibt ein beigefarbener, wachsiger Feststoff mit braunem Ölanteil. Der Feststoff ist zum Teil kristallin. Von einem entsprechenden Einkristall konnte eine Röntgenstrukturanalyse angefertigt werden.
Das Rohprodukt wird mit 2 mL Pentan versetzt und mehrere Stunden bei -20 °C gelagert. Die überstehende Lösung wird in der Kälte abgetrennt und der Feststoff nach Erwärmen auf Raumtemperatur i. Vak. getrocknet.
Ausbeute: 1,35 g (51 %).
¹H-NMR (300 MHz, C₆D₆) : δ = 2.96 (d, J = 11.4 Hz, 2 H, *CH₂*=CH-Si), 2.81 (d, J = 13.4 Hz, 2 H, *CH₂*=CH-Si), 2.80 [s, 6 H, (CH₃)₂S=O, *Ru-S*], 1.79 [dd, J = 13.4 Hz, J = 11.4 Hz, 2 H, CH₂=C*H*-Si], 1.41 [s, 6 H, (CH₃)₂S=O, *Ru-O*] 0.72 [s, 6 H, (CH₃)₂Si], 0.41 ppm [s, 6 H, (CH₃)₂Si].
¹³C{¹H}-NMR (125.8 MHz, C₆D₆): δ = 202.43 (s, CO), 50.46, 47.58, 43.25, 38.92 [4s, CH₂=CH-Si + (CH₃)₂S=O] 3.47 (CH₃Si), -0.98 ppm (CH₃Si) .
²⁹Si{¹H}-NMR (99.4 MHz, C₆D₆) : δ = 1.60 ppm (s).
IR: 1896, 1885 cm⁻¹ (vs, CO).

### Beispiel 2: Synthese von Ru(η⁴-dmbtd)₂(k-S-DMSO)

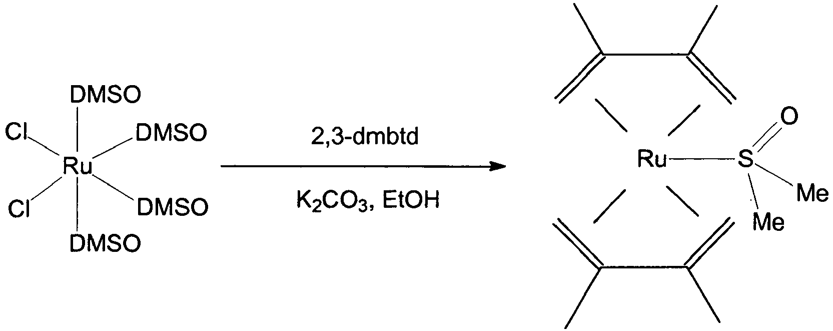

In einer Argonatmosphäre wird ein Gemisch aus 4,03 g (8,32 mmol) *cis*-RuCl₂(DMSO)₄, 6,83 g (83,2 mmol) 2,3-Dimethylbutadien (=2,3 dmbtd) und 11,51 g (83,2 mmol) wasserfreies K₂CO₃ in 200 mL absolutem Ethanol vorgelegt und für 12 Stunden unter Rückfluß erhitzt. Flüchtiges wird m Vakuum entfernt und der Rückstand mit ca. 150 ml CH₂Cl₂ extrahiert. Das Extrakt wird i.Vak. eingedampft und der Rückstand mit ca. 250 mL Pentan extrahiert. Das Extrakt wird bis auf ein Volumen von ca. 30 mL i. Vak. eingeengt und über Nacht bei -80 °C gelagert. Die überstehende Lösung wird in der Kälte abgetrennt und der Rückstand i. Vak. getrocknet. Ausbeute: 1,53 g (54 %).
¹H-NMR (C₆D₆) : δ = 2.75 [s, 6 H, (CH₃)₂S=O], 1.96 [s, 4 H, C*H*₂=C (Me), Hₑₓₒ], 1.49 (s, 12 H, C*H*₃C=CH₂), 0.16 ppm [s, 4 H, C*H*₂=C (Me), H_{endo}].
¹³C{¹H}-NMR (C₆D₆) : δ = 93.3 [s, *C*(Me)=CH₂, C_{quart}], 49.7 [s, (CH₃)₂S=O], 42.4 [s, CH₂=C(Me)], 18.3 ppm (s, CH₃-C=CH₂).

### Untersuchung der katalytischen Eigenschaften

### Beispiele 3 & 4, sowie Vergleichsbeispiel 1

Ein Gemisch aus 2,5 g (ca. 2,63 mmol) H-Polymer 13 und 1,44 g (5,78 mmol) 3-Vinylheptamethyltrisiloxan wird mit einer entsprechenden Menge eines Katalysators (300 ppm Ru bzw. 100 ppm Pt bezogen auf die Gesamtmasse des Ansatzes) versetzt und bei 120 °C für 15 min. gerührt. Die Analytik der Hydrosilylierungs-reaktion (Edukt-Umsatz, Selektivität zum β-Additionsprodukt der Hydrosilylierung, Ausbeute) erfolgt per ¹H-NMR. Die Ergebnisse sind in Tabelle 1 wiedergeben.

**Tabelle 1**

| Beispiel | Katalysator | Umsatz [%] | Selektivität [%] | Ausbeute [%] |
|---|---|---|---|---|
| 3 | Ru-Katalysator aus Beispiel 1 | 98 | 93 | 92 |
| 4 | Ru-Katalysator aus Beispiel 2 | 97 | 81 | 78 |
| Vergleichsbeispiel 1 | Pt-Divinyltetramethyldisiloxan-Komplex ("Karstedt-Katalysator"), in Xylol | 100 | 91 | 91 |

### Beispiele 5 & 6, sowie Vergleichsbeispiel 2

10,0 g eines Vinyldimethylsiloxy-terminierten
Polydimethylsiloxans mit einer Viskosität von 500 mPa·s werden mit einer entsprechenden Menge eines Katalysators (300 ppm Ru bzw. 100 ppm Pt bezogen auf die Gesamtmasse des Ansatzes) versetzt, in einem Rundkolben intensiv vermischt und mit 250 mg eines SiH-funktionellen Polysiloxans der Formel Me₃SiO-[Si (H)Me-O]₄₈-SiMe₃ versetzt und nochmals intensiv vermischt. Der Ansatz wird in einem vortemperierten Ölbad bei 160 °C gerührt. Es wird die Zeit bestimmt, bis der Gelierungsvorgang soweit fortgeschritten ist, dass ein Rühren mit einem "Magnetrührfisch" bei 250 U/min nicht mehr möglich ist. Die Härte des Polymers erfolgt durch visuelle Beurteilung. Die Ergebnisse sind in Tabelle 2 wiedergegeben.

**Tabelle 2**

| Beispiel | Katalysator | Vernetzungszeit | Härte des Polymers |
|---|---|---|---|
| 5 | Ru-Katalysator aus Beispiel 1 | 54 s | Hartes, sprödes Polymer |
| 6 | Ru-Katalysator aus Beispiel 2 | 41 s | Hartes, sprödes Polymer, etwas weicher als in Beispiel 5 |
| Vergleichsbeispiel 2 | Pt-Divinyltetramethyldisiloxan-Komplex ("Karstedt-Katalysator"), in Xylol | < 5 s | Sehr hartes und sprödes Polymer |

### Beispiel 7 sowie Vergleichsbeispiel 3

50,0 g eines Vinyldimethylsiloxy-terminierten
Polydimethylsiloxans mit einer Viskosität von 20 Pa·s und 1,0 g SiH-Vernetzer werden mit Hilfe eines Rührers der Firma Janke & Kunkel IKA-Labortechnik, Typ RE 162 homogen vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa·s und einem Gehalt an Si-gebundenem Wasserstoff von 0,46 Gew.% ist. Anschließend wird die entsprechende Menge eines Katalysators (10 ppm Ru bzw. Pt bezogen auf die Gesamtmasse des Ansatzes) in 0,5 ml Dichlormethan gelöst, zugegeben und bei Raumtemperatur eingerührt.

Es werden die Anspringtemperaturen bei 50 °C mit Hilfe einer an DIN53529T3 angelehnten Methode bestimmt. Diese sind von den gewählten Methodenparametern abhängig.

Die Topfzeiten werden durch visuelle Beurteilung einer niedrigviskosen Modellrezeptur ermittelt. Die Ergebnisse sind in Tabelle 3 wiedergegeben.

**Tabelle 3**

| Beispiel | Katalysator | Anspringtemperatur | Topfzeit bei 50°C |
|---|---|---|---|
| 7 | Ru-katalysator aus Beispiel 1 | 119 °C | 10 d |
| Vergleichs -Beispiel 3 | Pt-Divinyltetramethyl-disiloxan-Komplex ("Karstedt-Katalysator") + Inhibitor (ECH) | 103 °C | < 1 d |

Der erfindungsgemäße Ru-Katalysator zeigt eine gute Aktivität bei einer ausreichend hohen Topfzeit von 10 d (=Tagen). Dagegen weist der Platinkatalysator trotz Zugabe des Inhibitors 1-Ethinyl-1-cyclohexanol (ECH) bei 50 °C eine kurze Topfzeit von unter einem Tag auf.

## Patentansprüche

1. Ru(0)-Sulfoxid-Komplex-Katalysatoren (D) der allgemeinen Formel (I), 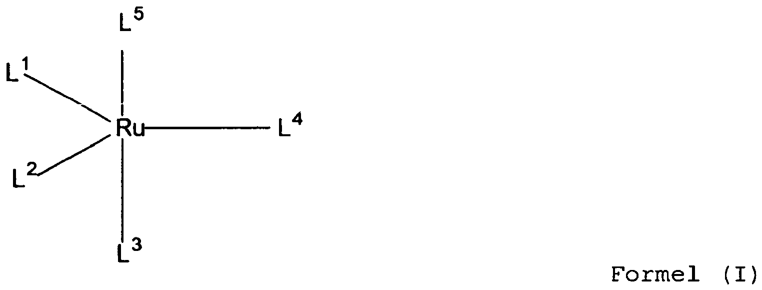 **dadurch gekennzeichnet, dass**
- mindestens einer der Liganden L¹ - L⁵ ein Sulfoxid-Ligand der allgemeinen Formel (II) ist
R¹-S(=O) -R² Formel (II),
wobei die Reste R¹ und R² unabhängig voneinander, gleich oder verschieden, ausgewählt werden aus der Gruppe enthaltend
o geradkettige und verzweigtkettige Alkylgruppen, Alkenylgruppen und Alkinylgruppen
o geradkettige und verzweigtkettige Alkylgruppen, Alkenylgruppen und Alkinylgruppen mit mindestens einem Substituenten, der ausgewählt ist aus der Gruppe enthaltend Alkoxy-, Siloxy-, Aryloxy-, Aryl-, Silyl-, Alkoxycarbonyl-, Aryloxycarbonyl-, Acyloxy-, Carbonamido- und Carbamoylgruppen sowie Halogenatomen;
o Phenylgruppen mit oder ohne Substituenten, wobei Substituenten ausgewählt werden aus der Gruppe enthaltend Alkyl-, Alkenyl-, Alkinyl-, Silyl-, Alkoxy-, Siloxy-, Aryloxy-, Aryl-, Alkoxycarbonyl-, Aryloxycarbonyl-, Acyloxy-, Carbonamido- und Carbamoylgruppen sowie Halogenatomen;
o R¹ und R² sind zu einem Heterocyclus, der das Schwefelatom enthält, oder zu einem Heterocyclus der der weitere Heteroatome enthält,
mit der Maßgabe, das R¹ und R² zusammen 2-24 Kohlenstoffatome aufweisen, und
- mindestens einer der Liganden L¹ - L⁵ ein über eine oder zwei C=C-Funktionen n-gebundener Ligand der allgemeinen Formel (III) ist 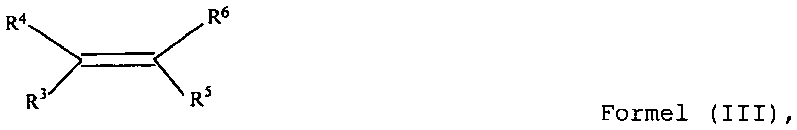 wobei
die Reste R³-R⁶ unabhängig voneinander, gleich oder verschieden, ausgewählt werden aus der Gruppe enthaltend Wasserstoff, geradkettige oder verzweigte, cyclische oder acyclische, C₁-C₅₀ Alkyl-, C₂-C₅₀ Alkenyl-, C₂-C₅₀ Alkinyl-, C₆-C₃₀ Aryl-Reste, bei denen einzelne C-Atome nicht substituiert sind oder substituiert sind durch Halogen-, O-, N-, S-, Si- oder P-Atome,
und
- die noch nicht besetzten Liganden L¹ - L⁵ gleich oder verschieden voneinander, ausgewählt werden aus der Gruppe der neutralen 2-, 4-, oder 6-Elektronen-Donatorliganden enthaltend,
• CO;
• CNR"' , wobei R"' wiederum ausgewählt wird aus der Gruppe enthaltend Alkyl und Aryl,
• PR"'₃ und P (OR"')₃, wobei R"' wiederum ausgewählt wird aus der Gruppe enthaltend Alkyl und Aryl;
• Liganden enthaltend N-Donatoren;
• Liganden enthaltend S-Donatoren, die nicht den Sulfoxiden der allgemeine Formel (1) entsprechen;
• Liganden enthaltend O-Donatoren;
• Carben-Liganden;
mit der Maßgabe, dass keiner der Liganden L¹ - L⁵ 1,5-Cyclooctadien oder 1,3,5-Cyclooctatrien ist.

2. Verwendung des Ru(0)-Sulfoxid-Komplex-Katalysatoren (D) gemäß Anspruch 1, für Hydrosilylierungsreaktionen, für Polymerisationsreaktionen, bei denen die Aktivierung durch Wärmezufuhr erfolgt.

3. Hydrosilylierbare Zusammensetzungen, enthaltend
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) mindestens einen erfindungsgemäßen Ru(0)-Sulfoxid-Komplex-Katalysator gemäß Anspruch 1.

4. Additionsvernetzende Zusammensetzungen, enthaltend
(i) mindestens eine Verbindung ausgewählt aus der Gruppe enthaltend die Verbindungen (A'), (B') und (C), wobei
(A') eine organische Verbindung und/oder eine siliziumorganische Verbindung, enthaltend mindestens zwei Reste mit aliphatischen Kohlenstoff-Kohlenstoff-Mehrfachbindungen,
(B') ein siliziumorganische Verbindung, enthaltend mindestens zwei Si-gebundenen Wasserstoffatome, und (C) eine siliziumorganische Verbindung, enthaltend SiC-gebundene Reste mit aliphatischen Kohlenstoff-Kohlenstoff-Mehrfachbindungen und Si-gebundene Wasserstoffatome,
bedeuten,
mit der Maßgabe, dass die Zusammensetzung mindestens eine Verbindung mit aliphatischen Kohlenstoff-Kohlenstoff-Mehrfachbindungen und mindestens eine Verbindung mit Si-gebundenen Wasserstoffatomen enthält, und
(ii)mindestens einen erfindungsgemäßen Ru(0)-Sulfoxid-Komplex-Katalysator (D) gemäß Anspruch 1.

## Claims

1. Ru(O)-sulfoxide complex catalysts (D) of the general formula (I), 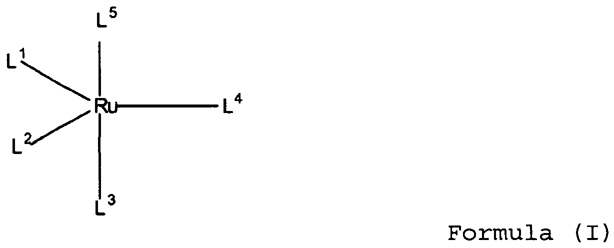 **characterized in that**
- at least one of the ligands L¹-L⁵ is a sulfoxide ligand of the general formula (II)
R¹-S(=O)-R² Formula (II),
where the radicals R¹ and R² are identical or different and are selected independently from the group consisting of
o straight-chain and branched alkyl groups, alkenyl groups and alkynyl groups,
o straight-chain and branched alkyl groups, alkenyl groups and alkynyl groups having at least one substituent selected from the group consisting of alkoxy, siloxy, aryloxy, aryl, silyl, alkoxycarbonyl, aryloxycarbonyl, acyloxy, carboxamido and carbamoyl groups and halogen atoms;
o phenyl groups which are substituted or unsubstituted, where substituents are selected from the group consisting of alkyl, alkenyl, alkynyl, silyl, alkoxy, siloxy, aryloxy, aryl, alkoxycarbonyl, aryloxycarbonyl, acyloxy, carboxamido and carbamoyl groups and halogen atoms;
o R¹ and R² are joined to form a heterocycle containing the sulfur atom or a heterocycle containing further heteroatoms,
with the proviso that R¹ and R² together have 2-24 carbon atoms, and
- at least one of the ligands L¹-L⁵ is a ligand which is π-bonded via one or two C=C functions and has the general formula (III) 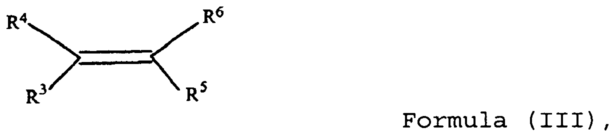 where
the radicals R³-R⁶ are identical or different and are selected independently from the group consisting of hydrogen, straight-chain or branched, cyclic or acyclic, C₁-C₅₀-alkyl, C₂-C₅₀-alkenyl, C₂-C₅₀-alkynyl, C₆-C₃₀-aryl radicals in which individual carbon atoms are unsubstituted or substituted by halogen, O, N, S, Si or P atoms,
and
- the not yet occupied ligands L¹-L⁵ are identical or different and are selected from the group consisting of uncharged 2-, 4- or 6-electron donor ligands containing
• CO;
• CNR"', where R"' is selected from the group consisting of alkyl and aryl;
• PR"'₃ and P (OR"')₃, where R"' is selected from the group consisting of alkyl and aryl;
• ligands containing N donors;
• ligands which contain S donors and do not correspond to the sulfoxides of the general formula (1);
• ligands containing O donors;
• carbene ligands;
with the proviso that none of the ligands L¹-L⁵ is 1,5-cyclooctadiene or 1,3,5-cyclooctatriene.

2. Use of the Ru(0)-sulfoxide complex catalyst (D) according to Claim 1 for hydrosilylation reactions, for polymerization reactions, in which activation is effected by introduction of heat.

3. Hydrosilylatable compositions containing
(A) a compound having at least one aliphatic unsaturated carbon-carbon bond,
(B) a compound having at least one silicon-hydrogen bond and
(D) at least one Ru(O)-sulfoxide complex catalyst according to the invention according to Claim 1.

4. Addition-crosslinking compositions containing
(i) at least one compound selected from the group consisting of the compounds (A'), (B') and (C) ,
where
(A') is an organic compound and/or an organosilicon compound containing at least two radicals having aliphatic carbon-carbon multiple bonds,
(B') is an organosilicon compound containing at least two Si-bonded hydrogen atoms and
(C) is an organosilicon compound containing SiC-bonded radicals having aliphatic carbon-carbon multiple bonds and Si-bonded hydrogen atoms,
with the proviso that the composition contains at least one compound having aliphatic carbon-carbon multiple bonds and at least one compound having Si-bonded hydrogen atoms, and
(ii) at least one Ru(O)-sulfoxide complex catalyst (D) according to the invention according to Claim 1.

## Revendications

1. Catalyseurs de type complexe sulfoxyde-Ru(O) (D) de formule générale (I), 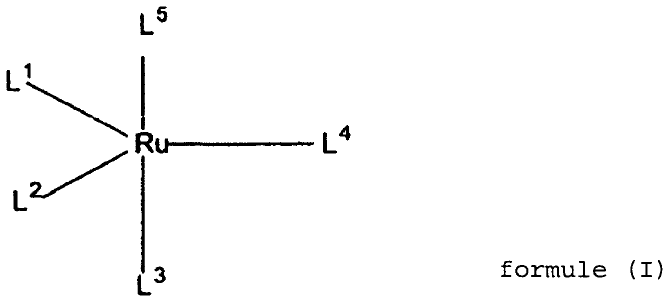 **caractérisés en ce que**
- au moins l'un des ligands L¹ - L⁵ est un ligand sulfoxyde de formule générale (II)
R¹- S(=O)-R² formule (II),
dans laquelle les radicaux R¹ et R², identiques ou différents, sont choisis, indépendamment l'un de l'autre, dans l'ensemble contenant
o des groupes alkyle, des groupes alcényle et des groupes alcynyle à chaîne droite et à chaîne ramifiée
o des groupes alkyle, des groupes alcényle et des groupes alcynyle à chaîne droite et à chaîne ramifiée, comportant au moins un substituant qui est choisi dans l'ensemble contenant des groupes alcoxy, siloxy, aryloxy, aryle, silyle, alcoxycarbonyle, aryloxy-carbonyle, acyloxy, carbonamido et carbamoyle ainsi que des atomes d'halogène ;
o des groupes phényle portant ou non des substituants, les substituants étant choisis dans l'ensemble contenant des groupes alkyle, alcényle, alcynyle, silyle, alcoxy, siloxy, aryloxy, aryle, alcoxycarbonyle, aryloxy-carbonyle, acyloxy, carbonamido et carbamoyle ainsi que des atomes d'halogène ;
o R¹ et R² sont réunis en un hétérocycle qui contient l'atome de soufre, ou en un hétérocycle qui contient d'autres hétéro-atomes,
étant entendu que R¹ et R² comportent ensemble 2-24 atomes de carbone, et
- au moins l'un des ligands L¹ - L⁵ est un ligand n-lié par une ou deux fonctions C=C, de formule générale (III) 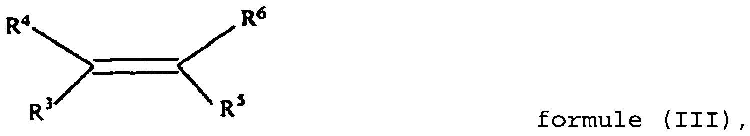 dans laquelle
les radicaux R³-R⁶, identiques ou différents, sont choisis, indépendamment les uns des autres, dans l'ensemble constitué par un atome d'hydrogène, des groupes alkyle en C₁-C₅₀, alcényle en C₂-C₅₀, alcynyle en C₂-C₅₀, aryle en C₆-C₃₀, à chaîne droite ou ramifiée, cycliques ou acycliques, dans lesquels des atomes de carbone individuels ne sont pas substitués ou sont substitués par des atomes d'halogène, d'oxygène, d'azote, de soufre, de silicium ou de phosphore,
et
- les ligands L¹ - L⁵ non encore occupés, identiques ou différents les uns des autres, sont choisis dans le groupe des ligands neutres donneurs de 2, 4 ou 6 électrons, contenant
• CO ;
• CNR"', R"' étant à son tour choisi dans l'ensemble contenant des groupes alkyle et aryle,
• PR"''₃ et P- (OR"')₃, R"' étant à son tour choisi dans l'ensemble contenant des groupes alkyle et aryle ;
• des ligands contenant des donneurs d'azote ;
• des ligands contenant des donneurs de soufre, qui ne correspondent pas aux sulfoxydes de formule générale (I) ;
• des ligands contenant des donneurs d'oxygène ;
• des ligands carbène ;
étant entendu qu'aucun des ligands L¹ - L⁵ n'est 1,5-cyclo-octadiène ou 1,3,5-cyclo-octatriène.

2. Utilisation des catalyseurs de type complexe sulfoxyde-Ru(O) (D) selon la revendication 1, pour des réactions d'hydrosilylation, pour des réactions de polymérisation, dans lesquelles l'activation s'effectue par apport de chaleur.

3. Compositions aptes à l'hydrosilylation, contenant
(A) un composé comportant au moins une liaison carbone-carbone à insaturation aliphatique,
(B) un composé comportant au moins une liaison silicium-hydrogène et
(D) au moins un catalyseur de type complexe sulfoxyde-Ru(0) selon l'invention, conformément à la revendication 1.

4. Compositions réticulables par addition, contenant
(i) au moins un composé choisi dans l'ensemble contenant les composés (A'), (B') et (C),
(A') représentant un composé organique et/ou un composé organosilicié, contenant au moins deux radicaux à liaisons multiples carbone-carbone aliphatiques,
(B') représentant un composé organosilicié, contenant au moins deux atomes d'hydrogène liés à Si, et
(C) représentant un composé organosilicié, contenant des radicaux liés par une liaison SiC, comportant des liaisons multiples carbone-carbone aliphatiques et des atomes d'hydrogène liés à Si, étant entendu que la composition contient au moins un composé comportant des liaisons multiples carbone-carbone aliphatiques et au moins un composé comportant des atomes d'hydrogène liés à Si, et
(ii) au moins un catalyseur de type complexe sulfoxyde-Ru(0) (D) selon la revendication 1.
